# EUROPEAN PATENT SPECIFICATION

(11) **EP 1 461 194 B1**
(45) Date of publication and mention of the grant of the patent: **28.03.2007**
(21) Application number: 02804618.3
(22) Date of filing: 06.12.2002
(51) Int. Cl.: B29C 44/10

(54) **METHOD OF MANUFACTURING A NOZZLE ARRANGEMENT**
VERFAHREN ZUR HERSTELLUNG EINER DÜSENANORDNUNG
PROCEDE DE FABRICATION D'UN ENSEMBLE BUSE

(30) Priority: 08.12.2001 GB 0129438; 12.08.2002 GB 0218697
(43) Date of publication of application: 29.09.2004
(73) Proprietor: INCRO LIMITED, Stourbridge, West Midlands DY8 3PQ (GB)
(72) Inventor: LAIDLER, Keith, Stourbridge, West Midlands DY8 3PQ (GB)
(74) Representative: Wilson Gunn
(86) International application number: PCT/GB2002/005529
(87) International publication number: WO 2003/049916

(56) References cited:
- WO-A-01/89958
- WO-A-94/12406
- WO-A-97/31841
- PATENT ABSTRACTS OF JAPAN vol. 1997, no. 07, 31 July 1997 (1997-07-31) -& JP 09 076297 A (HITACHI LTD), 25 March 1997 (1997-03-25)

## Description

This invention relates to a method of manufacturing a nozzle arrangement. More particularly, this invention relates to a method of manufacturing a split nozzle arrangement as defined herein.

Nozzle arrangements are widely used to actuate and control the release of a whole range of commercially available products, illustrative examples of which include insecticides, paints and lacquers, air freshener, waxes and polishes, oven cleaners, starches and fabric cleaners, window/ glass cleaners, shoe/leather cleaners, household products, hair care products, colognes and perfumes, deodorant or body sprays, antiperspirants, pharmaceuticals, industrial products and certain food products.

Nozzle arrangements are commonly fitted to pressurised containers, such as a portable aerosol canister. One of the most widely used forms of such nozzle arrangements is a so-called "spray-through cap" which is fitted to one end of an aerosol canister and comprises an actuator which is configured to selectively engage with and open an outlet valve of the aerosol canister, thereby enabling the release of the product stored in the container to be actuated by the operation of the actuator.

Nozzle arrangements are also present in so-called pump or trigger nozzle devices, which are fitted to the openings of various non-pressurised containers to provide a means by which the product stored therein can be dispensed through the nozzle arrangement. The product stored in such containers can be dispensed through the nozzle arrangement by the operation of the pump or trigger, which effectively pumps the product through the nozzle arrangement.

A typical nozzle arrangement has a body that is adapted to be fitted to a container in the vicinity of its outlet. The body also typically comprises an inlet that receives the product released or ejected from the container and directs it into a fluid flow passage which connects the inlet to an outlet through which the product flowing through the arrangement is ejected into the external environment, typically in the form of a spray.

More recently, split nozzle arrangements have been developed. By "split nozzle arrangement", it is meant a nozzle arrangement which is formed from at least two component parts, each of said parts having an abutment surface which, when brought into abutment with one another, define therebetween the outlet, fluid flow passage and at least a portion of the inlet of the nozzle arrangement. Examples of such nozzle arrangements are described in WO 97/31841 and WO 01/89958, the entire contents of which are incorporated herein by reference.

Split nozzle arrangements are typically made of plastic and are manufactured by conventional plastic moulding techniques. However, problems can arise when split nozzle arrangements are manufactured using an injection moulding process because it is quite common for a phenomenon known as sinkage to occur. Sinkage occurs when a moulded article cools following its removal from the mould and the cooling of the plastic results in the shrinkage of the plastic in certain areas and ultimately results in a distortion of the shape, or "sinkage", occurring at certain surfaces of the article. This distortion in shape is of no real functional importance in situations where the moulded article is, for example, a plastic washing-up bowl. However, sinkage can be a problem in a split nozzle arrangement of two-part construction, such as those described in WO 97/31841 and WO 01/89958, because the occurrence of even a small amount of sinkage at one of the abutment surfaces can result in the distortion of the structure of the fluid flow passage, the inlet or the outlet. Such distortions in structure are a particular problem if they occur in the vicinity of a critical part of the nozzle arrangement such as, for example, the outlet orifice or any internal features that may be formed in the fluid flow passageway (e.g. one or more expansion chambers, inner orifices, venturi chambers, swirl chambers or multiple channels etc.), because the precision with which these features are formed is critical to enable the nozzle arrangement to function properly and produce a spray having the desired properties (i.e. spray droplet size distribution, the extent of dispersion, the volume of fluid dispensed, etc.).

In addition, distortion in the shape of the abutment surfaces or sealing elements provided on each of the two-separable parts can frequently result in the leakage of fluid passing through the nozzle arrangement and the subsequent seepage of the leaked fluid between the abutment surfaces.

It is an object of the present invention to provide a method of manufacturing a split nozzle arrangement for an aerosol in which the problem of shrinkage is obviated or at least minimised.

Therefore, in accordance with the present there is provided a method of manufacturing a split nozzle arrangement, said method comprising the steps of:
(i) injecting a mould for said nozzle arrangement with a mixture of a plastic base material and a foaming or blowing agent;
(ii) allowing said plastic base material to set or harden; and
(iii) removing the hardened plastic moulded nozzle arrangement from the mould;
wherein said foaming or blowing agent is capable of producing bubbles or pockets of gas in the plastic base material to form a hardened plastic moulded nozzle arrangement in which at least 90% of said bubbles or pockets of gas have a maximum size dimension of 0.5 millimeters or less.

It is known to use foaming or blowing agents in plastic injection moulding processes to produce moulded articles that are composed of both thick and thin sections of plastic. However, foaming or blowing agents have not been used in the preparation of a plastic moulded article such as an aerosol nozzle arrangement which, in the areas where sinkage can be a particular problem (such as the fluid flow passage, the inlet or the outlet), is principally formed of thin sections of moulded plastic, generally having thicknesses within the range of 0.5 to 1.0 millimetres, with a thickness of 0.7 millimetres being most usual. This is primarily because a blowing agent would not be expected to alleviate the problem in such extremely thin sections of plastic where the amount of sinkage that occurs can be very small, for example of the order of 0.2 to 0.1 millimetres, and as such may not even be visible to the naked eye. Furthermore, it would not be expected that a plastic base material/foaming or blowing agent mixture could be provided which (i) contains sufficient foaming or blowing agent to address the problems of sinkage in these thin sections of plastic, and (ii) does not result in two common problems associated with the use of a foaming blowing agent, namely the occurrence of over expansion in areas of the mould (which can again adversely effect the structure and performance of the nozzle arrangement), and the occurrence of a problem known as "break-through" which arises when bubbles or pockets of gas generated by the foaming or blowing agent puncture a surface of the moulded article, thereby adversely affecting the profile of that surface. It will of course be appreciated that if either of the aforementioned problems were to cause the distortion of one or more of the abutment surfaces of the component parts of the split nozzle, then the abutment surfaces would not fit together properly and this could result in the leakage of fluid passing through the inlet, outlet and/or fluid flow passage formed between said abutment surfaces.

Furthermore, the addition of a foaming or blowing agent would not be expected to solve the problem of sinkage reliably in a split nozzle arrangement, particularly given the tight tolerances that must be achieved, and for this reason, current attempts in this field to solve this problem have focussed on alternative methods, such as methods of forcing more plastic base material into the mould or the use of filler materials (e.g. chalk or talcum powder).

Despite the anticipated problems connected with the use of a foaming or blowing agent, it has surprisingly been found that by using a selected class of foaming or blowing agents which are capable of producing "microbubbles", i.e. bubbles or pockets of gas at least 90% of which have a diameter, or other maximum dimension, of up to 0.5 millimetres or less, it is possible to produce a plastic moulded split nozzle arrangement in which the problem of sinkage is obviated.

Furthermore, the introduction of a foaming or blowing agent into the plastic base material improves the melt-flow characteristics of the plastic base materials when compared with the plastic base material alone, i.e. without the addition of the foaming or blowing agent. These improved flow properties enable the mould to be completely filled the plastic base material/foaming or blowing agent mixture and this circumvents any further manufacturing problems associated with the incomplete filling of the mould.

Preferably, 95% of the bubbles or pockets of gas formed by the foaming or blowing agent have a maximum diameter or other dimension of 0.5 millimetres or less. Most preferably, 98-99% of the bubbles or pockets of gas formed by the foaming or blowing agent have a maximum diameter or other dimension of 0.5 millimetres or less.

It is especially preferred that 98-99% the microbubbles formed by the foaming or blowing agent have a maximum diameter, or other maximum dimension, of less than 0.15 millimetres and, most preferably, of less than 0.07 millimetres.

Preferably, the plastics base material from which the nozzle arrangement is to be manufactured is a thermoplastic material which is initially in a liquid or "flowable" form prior to injection into the mould and can then be allowed to set or harden by heating and subsequent cooling the mixture to yield the final moulded nozzle arrangement.

The foaming or blowing agent may be an exothermic foaming or blowing agent, but is preferably an endothermic foaming or blowing agent. By "endothermic foaming or blowing agent", it is meant a foaming or blowing agent that, under the conditions employed in the moulding process, absorbs heat from the surroundings to initiate either the chemical reaction or decomposition of the foaming or blowing agents to give off a gas. The gas is preferably carbon dioxide. Endothermic foaming or blowing agents are especially preferred if the plastic base material is thermoplastic material. The gas produced by the endothermic foaming or blowing agents introduces a microcellular foam structure to the plastic base material in the mould. It is this microcellular foam structure which is believed to prevent the occurrence of shrinkage in the final nozzle arrangement.

It is especially preferred that the foaming or blowing agent that is mixed with the plastic base material prior to injection into the mould is a foaming or blowing agent which comprises a mixture of bicarbonate of soda and acetic acid. The bicarbonate of soda undergoes a reaction with the acetic acid to generate microbubbles of carbon dioxide that have a maximum diameter, or other dimension, that is less than 0.2 millimetres. These microbubbles are dispersed within the plastic base material present in the mould and the presence of the bubbles within the final moulded split nozzle arrangement prevents sinkage occurring in the nozzle arrangement. Examples of such blowing agents include the blowing agents under the trade mark "SAFOAM" FPE 50 by Reedy International and the blowing agents sold under the trade mark "Maxithen" (such as the Maxithen HP789450 TR and HP78/700 TR blowing agents) by Gabriel-Chemie UK Limited.

Preferably, the bicarbonate of soda/acetic acid mixture is present in the plastic base material at a concentration within the range of 0.3% to 3 % w/v.

It is also important that the type and concentration of the blowing agent present in the mixture, together with the conditions in the mould, are such that bubbles or pockets of gas generated by the foaming or blowing agent do not result in the problem of break-through (i.e. the bubbles do not puncture the surface of the moulded article) because, as previously mentioned, the resultant imperfections in the walls and surfaces moulded nozzle arrangement could give rise to leakage.

Preferably the blowing agent is provided, and mixed with the plastic base material, in a powder form.

The blowing agent may in practice be mixed into the plastic base material prior to injection of the mixture into the mould or, alternatively, may be mixed at the point of injection or by simultaneous injection into the mould.

The at least two separable parts of the nozzle arrangements formed by the method of the present invention can be separated during use to allow access to the fluid flow channel in the nozzle arrangement which is useful to enable the cleaning of the nozzle arrangement and thereby prevent the nozzle arrangement from becoming blocked. Alternatively, the at least two parts can be ultrasonically welded together following manufacture.

The invention will now be described further in reference to the following specific Example.

### Example: Preparation of a spray-through cap nozzle arrangement for use with an aerosol canister.

A spray-through cap nozzle arrangement was prepared by injecting a mixture of polypropylene and 2% w/v Safoam ^{®} FPE 50 into a mould. The mixture was then heated for 10 seconds at an elevated temperature in the mould and then allowed to cool. A spray-through cap nozzle arrangement is formed in which no sinkage is evident.

In contrast, the equivalent article prepared without the Safoam ^{®} FPE 50 blowing agent, results in a spray-through cap nozzle arrangement in which sinkage is evident.

It is of course to be understood that the invention is not intended to be restricted to the details of the above embodiment which is described by way of example only.

## Claims

1. A method of manufacturing a split nozzle arrangement, said method comprising the steps of:
(i) injecting a mould for said nozzle arrangement with a mixture of a plastic base material and a foaming or blowing agent;
(ii) allowing said plastic base material to set or harden; and
(iii) removing the hardened plastic moulded nozzle arrangement from the mould;
wherein said foaming or blowing agent is capable of producing bubbles or pockets of gas in the plastic base material to form a hardened plastic moulded nozzle arrangement in which at least 90% of said bubbles or pockets of gas have a maximum size dimension of 0.5 millimeters or less.

2. A method as claimed in Claim 1, wherein said plastic base material is a thermoplastic.

3. A method as claimed in Claim 1 or 2, wherein said foaming or blowing agent is an endothermic foaming or blowing agent.

4. A method as claimed in Claim 3, wherein said foaming or blowing agent comprises a mixture of bicarbonate of soda and acetic acid.

5. A method as claimed in Claim 4, wherein said mixture of bicarbonate of soda and acetic acid is present in the plastic base material at a concentration of 0.3% to 3% w/v.

6. A method as claimed in Claim 4 or 5, wherein said mixture of bicarbonate of soda and acetic acid is provided in powder form for mixing with said plastic base material.

7. A method as claimed in any preceding claim, wherein said nozzle arrangement is in the form of a spray-through cap.

8. A method as claimed in any one of the preceding claims, wherein said split nozzle arrangement comprises two releasably connectable parts, each of the respective parts having an abutment surface which, when the two abutment surfaces are brought into contact, define therebetween a fluid outlet, a fluid inlet and a fluid flow passage which connects the fluid outlet to the fluid inlet.

9. A method as claimed in any one of the preceding claims, wherein at least 95% of said bubbles or pockets of gas have a maximum size dimension of 0.5 millimeters or less.

10. A method as claimed in any one of the preceding claims, wherein 98-99% of said bubbles or pockets of gas have a maximum size dimension of 0.5 millimeters or less.

11. A method as claimed in any one of the preceding claims, wherein 98-99% of said bubbles or pockets of gas have a maximum size dimension of 0.15 millimeters or less.

12. A method as claimed in any one of the preceding claims, wherein 98-99% of said bubbles or pockets of gas have a maximum size dimension of 0.07 millimeters or less.

## Patentansprüche

1. Verfahren zum Herstellen einer Spaltdüsenanordnung, wobei das Verfahren folgende Schritte enthält:
(i) Einspritzen einer Mischung aus einem Kunststoffbasismaterial und einem Schaumbildner bzw. Treibmittel in eine Form für die genannte Düsenanordnung;
(ii) das genannte Kunststoffbasismaterial sich verfestigen bzw. aushärten lassen; und
(iii) Entfernen der ausgehärteten aus Kunststoff geformten Düsenanordnung aus der Form;
wobei der genannte Schaumbildner bzw. das genannte Treibmittel befähigt ist, Luftblasen oder Gastaschen in dem Kunststoffbasismaterial zu erzeugen, um eine ausgehärtete aus Kunststoff geformte Düsenanordnung zu bilden, wobei mindestens 90% der genannten Luftblasen oder Gastaschen eine Größe von maximal 0,5 Millimeter oder weniger haben.

2. Verfahren nach Anspruch 1, bei welchem das genannte Kunststoffbasismaterial ein Thermoplast ist.

3. Verfahren nach Anspruch 1 oder 2, bei welchem der genannte Schaumbildner bzw. das Treibmittel ein endothermer Schaumbildner bzw. ein endothermes Treibmittel ist.

4. Verfahren nach Anspruch 3, bei welchem der genannte Schaumbildner bzw. das genannte Treibmittel eine Mischung aus Natriumbicarbonat und Essigsäure aufweist.

5. Verfahren nach Anspruch 4, bei welchem die genannte Mischung aus Natriumbicarbonat und Essigsäure in dem Kunststoffbasismaterial in einer Konzentration von 0,3% bis 3% w/v (Gewicht/Volumen) vorliegt.

6. Verfahren nach Anspruch 4 oder 5, bei welchem die genannte Mischung aus Natriumbicarbonat und Essigsäure in Pulverform bereitgestellt wird, um es mit dem genannten Kunststoffbasismaterial zu mischen.

7. Verfahren nach einem der vorhergehenden Ansprüche, bei welchem die genannte Düsenanordnung die Form einer Durchsprühkappe hat.

8. Verfahren nach einem der vorhergehenden Ansprüche, bei welchem die genannte Spaltdüsenanordnung zwei lösbar verbindbare Teile aufweist, wobei jedes der entsprechenden Teile eine angrenzende Oberfläche hat, die, wenn die beiden angrenzenden Oberflächen sich berühren, dazwischen einen Medienaustritt, einen Medieneinlass und einen Medienflussdurchlass definieren, der den Medienaustritt mit dem Medieneinlass verbindet.

9. Verfahren nach einem der vorhergehenden Ansprüche, bei welchem mindestens 95% der genannten Blasen oder Gastaschen eine Größe von maximal 0,5 Millimeter oder weniger haben.

10. Verfahren nach einem der vorhergehenden Ansprüche, bei welchem mindestens 98-99% der genannten Blasen oder Gastaschen eine Größe von maximal 0,5 Millimeter oder weniger haben.

11. Verfahren nach einem der vorhergehenden Ansprüche, bei welchem mindestens 98-99% der genannten Blasen oder Gastaschen eine Größe von maximal 0,15 Millimeter oder weniger haben.

12. Verfahren nach einem der vorhergehenden Ansprüche, bei welchem mindestens 98-99% der genannten Blasen oder Gastaschen eine Größe von maximal 0,07 Millimeter oder weniger haben.

## Revendications

1. Procédé de fabrication d'un ensemble buse fendu, ledit procédé comprenant les étapes consistant à :
(i) injecter dans un moule pour ledit ensemble buse un mélange d'un matériau de base plastique et d'un agent moussant ou d'expansion ;
(ii) permettre audit matériau de base plastique de se sécher ou durcir ; et
(iii) retirer l'ensemble buse moulé en plastique durci du moule ;
dans lequel ledit agent moussant ou d'expansion peut produire des bulles ou des poches de gaz dans le matériau de base plastique pour former un ensemble buse moulé en plastique durci dans lequel au moins 90 % desdites bulles ou poches de gaz ont une dimension granulométrique maximum de 0,5 millimètre ou moins.

2. Procédé selon la revendication 1, dans lequel ledit matériau de base plastique est un thermoplastique.

3. Procédé selon la revendication 1 ou 2, dans lequel ledit agent moussant ou d'expansion est un agent moussant ou d'expansion endothermique.

4. Procédé selon la revendication 3, dans lequel ledit agent moussant ou d'expansion comprend un mélange de bicarbonate de soude et d'acide acétique.

5. Procédé selon la revendication 4, dans lequel ledit mélange de bicarbonate de soude et d'acide acétique est présent dans le matériau de base plastique à une concentration de 0,3 % à 3 % p/v.

6. Procédé selon la revendication 4 ou 5, dans lequel ledit mélange de bicarbonate de soude et d'acide acétique est fourni sous la forme de poudre pour être mélangé avec ledit matériau de base plastique.

7. Procédé selon l'une quelconque des revendications précédentes, dans lequel ledit ensemble buse est sous la forme d'un capuchon pulvérisateur.

8. Procédé selon l'une quelconque des revendications précédentes, dans lequel ledit ensemble buse fendu comprend deux parties connectées de manière amovible, chacune des parties respectives ayant une surface de butée qui, lorsque les deux surfaces de butée sont mises en contact, définissent entre elles une sortie de fluide, une entrée de fluide et un passage du débit de fluide qui relie la sortie de fluide à l'entrée de fluide.

9. Procédé selon l'une quelconque des revendications précédentes, dans lequel au moins 95 % desdites bulles ou poches de gaz ont une dimension granulométrique maximum de 0,5 millimètre ou moins.

10. Procédé selon l'une quelconque des revendications précédentes, dans lequel 98 % à 99 % desdites bulles ou poches de gaz ont une dimension granulométrique maximum de 0,5 millimètre ou moins.

11. Procédé selon l'une quelconque des revendications précédentes, dans lequel 98 % à 99 % desdites bulles ou poches de gaz ont une dimension granulométrique maximum de 0,15 millimètre ou moins.

12. Procédé selon l'une quelconque des revendications précédentes, dans lequel 98 % à 99 % desdites bulles ou poches de gaz ont une dimension granulométrique maximum de 0,07 millimètre ou moins.
